# EUROPEAN PATENT APPLICATION

(11) **EP 4 770 011 A1**
(43) Date of publication of application: **01.07.2026**
(21) Application number: 25192730.7
(22) Date of filing: 30.07.2025
(51) Int. Cl.: H04L 9/40

(54) **METHOD AND APPARATUS FOR TRACKING COMMAND AND CONTROL SERVER**

(30) Priority: 26.12.2024 KR 20240196744
(71) Applicant: Penta Security Systems, Inc., Seoul 07241 (KR)
(72) Inventor: OH, Jin Hyeok, 14247, Gwangmyeong-si, Gyeonggi-do (KR); YUN, Keon, 05825, Songpa-gu, Seoul (KR); KIM, Min Chul, 02479, Dongdaemun-gu, Seoul (KR); OH, Yun Jin, 07519, Gangseo-gu, Seoul (KR); LEE, Jun Yong, 12257, Namyangju-si, Gyeonggi-do (KR); KIM, Tae Gyun, 16811, Yongin-si, Gyeonggi-do (KR)
(74) Representative: Stöckeler, Ferdinand

(57) **Abstract**

A method of tracking a command and control (C&C) server, which is performed by an apparatus for monitoring a process activity and a registry change of a host personal computer (PC), may comprise: storing a virtual private network (VPN) communication internet protocol (IP) when malware within the host PC attempts a VPN connection to an external server; monitoring or storing transmitted and received data between the host PC and the external server; analyzing the transmitted and received data; and registering the VPN communication IP on a blacklist when a suspicious activity is present in a result of the analysis of the transmitted and received data.

## Description

### CROSS-REFERENCE TO RELATED APPLICATIONS

This application claims priority to Korean Patent Application No. 10-2024-0196744, filed on December 26, 2024, with the Korean Intellectual Property Office (KIPO), the entire contents of which are hereby incorporated by reference.

### BACKGROUND

### 1. Technical Field

Exemplary embodiments of the present disclosure relate in general to a technology for effectively tracking a command and control (C&C) server.

### 2. Related Art

A command and control (C&C) server is a control server used by an attacker to control hacking tools, such as malware or a botnet, in a remote device, system, or network. A botnet is a network controlled by an attacker under the control of a C&C server.

That is, a C&C server is used to remotely issue a command to infected devices, systems, or networks and collect data from the infected devices, systems, or networks. Such a C&C server includes an application or platform used by the attacker to control hacking tools.

Malware in infected devices, systems, or networks communicates with the C&C server to receive commands and leak data and may even delete its own code stored on disk to avoid detection by security programs after being loaded into memory. Attackers may update malware or commands through the C&C server to continuously maintain an infected network, such as a botnet.

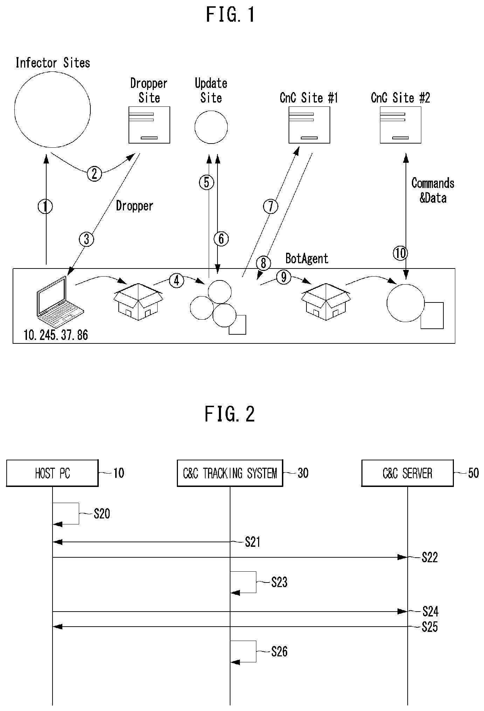

More specifically, FIG. 1 illustrates a process in which malware infiltrates a user device, ultimately resulting in control being hijacked and data being exfiltrated. As indicated by ① through ⑩ in FIG. 1, a user device having a specific internet protocol (IP) address inadvertently accesses an infector site. The site leaves a trace of access on the user device for malware distribution. The infector site then redirects the user device to a dropper site. The dropper site contains key files and processes for installing malware. From the dropper site, malware or a hacking tool (commonly referred to as "dropper") is downloaded and installed onto the user device. In this process, obfuscation techniques are utilized to prevent the user from noticing the file download.

The hacking tool installed on the user device is loaded into the system memory of the user device and activated. At this stage, the hacking tool analyzes security vulnerabilities of the terminal and prepares for the next stage of operations. The activated hacking tool transmits initial information collected from the terminal of the user to an update site, also referred to as a dropper update site. This process serves as foundational work for the malware to receive additional commands from the update site. The update site provides specific update data to the user device. The update data typically includes elements designed to enhance the functionality of the malware or perform additional operations, such as updates.

The hacking tool installed on the user device transmits data from the user device to a C&C site #1. The data typically includes system information and network status of the user device. Through this, the C&C site #1 issues commands to the user device to remotely control the system. That is, the attacker prepares to utilize the user device as a bot or netbot connected to the network of the attacker. The C&C site may also be denoted as a CnC site.

Once a bot agent is installed on the user device according to the commands from the C&C site #1, the bot agent is used to more effectively control the system of the user device and execute remote commands.

Finally, a C&C site #2 delivers commands to the user device and collects additional data. The data may include sensitive information of the user, system logs, network traffic, and the like, and the attackers may exploit such data according to their purposes.

Additionally, some malware communicates with the C&C server through a virtual private network (VPN). Such malware issues a virtual internet protocol (IP) address during VPN communication for use in communication, making it difficult to track the IP address of the C&C server.

Blocking the above described C&C servers significantly restrict the functionality of malware. However, up to date, methods of effectively blocking C&C servers remain insufficient. As such, there is a demand for methods capable of effectively blocking C&C servers to protect personal information or confidential information of companies or organizations.

### SUMMARY

Accordingly, exemplary embodiments of the present disclosure are provided to substantially obviate one or more problems due to limitations and disadvantages of the related art.

Exemplary embodiments of the present disclosure provide a method and apparatus for tracking a command and control (C&C) server that enable a C&C server to be effectively tracked during initial data communication of malware, in order to resolve a limitation of being unable to identify a C&C server because C&C server information is concealed within the malware.

Exemplary embodiments of the present disclosure also provide a method and apparatus for tracking a C&C server that enable a C&C server to be effectively tracked through data recovery after deletion of malware, in order to resolve a limitation of residual threats of malware after the malware has been deleted.

According to a first exemplary embodiment of the present disclosure, a method of tracking a command and control (C&C) server, which is performed by an apparatus for monitoring a process activity and a registry change of a host personal computer (PC), may comprise: storing a virtual private network (VPN) communication internet protocol (IP) when malware within the host PC attempts a VPN connection to an external server; monitoring or storing transmitted and received data between the host PC and the external server; analyzing the transmitted and received data; and registering the VPN communication IP on a blacklist when a suspicious activity is present in a result of the analysis of the transmitted and received data.

The method may further comprise: identifying whether a new process is generated in the host PC.

The method may further comprise: monitoring a network connection and file writing used by a process generated in the host PC.

The method may further comprise: identifying whether a registry is generated in the host PC.

The suspicious activity may include use of an abnormal port, requesting a domain of an external server, and inclusion of a strange string in a request header.

The method may further comprise: monitoring whether a file of malware in the host PC is deleted; recovering data of the malware when the file of the malware is deleted; analyzing a recovery file of the malware; and registering an IP address identified in the recovery file on the blacklist when suspicious information is present in a result of analyzing the recovery file.

According to a second exemplary embodiment of the present disclosure, a method of tracking a command and control (C&C) server, which is performed by an apparatus for monitoring a process activity and a registry change of a host personal computer (PC), may comprise: monitoring whether a file of malware in the host PC is deleted; recovering data of the malware; analyzing a recovery file of the malware; and registering an IP address identified in the recovery file on a blacklist when suspicious information is present in a result of analyzing the recovery file.

The analyzing of the recovery file may include: identifying at least one of a domain, a uniform resource locator (URL), an internet protocol (IP) address, and port information in the recovery file.

The analyzing of the recovery file may include: identifying C&C server information hard-coded in the recovery file.

The analyzing of the recovery file may include: tracking an execution flow using a debugger when the recovery file includes encrypted information; and identifying C&C server information in tracked data or decrypted data.

The analyzing of the recovery file may include: identifying whether an execution file that is the recovery file operates when a specific condition is satisfied.

According to a third exemplary embodiment of the present disclosure, an apparatus for tracking a command and control (C&C) server, which monitors a process activity and a registry change of a host personal computer (PC), the apparatus may comprise: a processor; and a memory connected to the processor and storing at least one instruction, wherein the at least one instruction may cause the processor to: store a virtual private network (VPN) communication internet protocol (IP) when malware within the host PC attempts a VPN connection to an external server; monitor or store transmitted and received data between the host PC and the external server; analyze the transmitted and received data; and register the VPN communication IP on a blacklist when a suspicious activity is present in a result of the analysis of the transmitted and received data.

The processor may identify whether a new process is generated in the host PC and monitor a network connection and file writing used by a process generated in the host PC.

The processor may identify whether a registry is generated in the host PC.

The suspicious activity may include: use of an abnormal port, requesting a domain of an external server, and inclusion of a strange string in a request header.

The processor may be configured to: monitor whether a file of malware in the host PC is deleted; recover data of the malware when the file of the malware is deleted; analyze a recovery file of the malware; and register an IP address identified in the recovery file on the blacklist when suspicious information is present in a result of analyzing the recovery file.

The analysis of the recovery file may include identifying at least one of a domain, a uniform resource locator (URL), an internet protocol (IP) address, or port information in the recovery file.

The analysis of the recovery file may include: identifying C&C server information hard-coded in the recovery file.

The analysis of the recovery file may include: tracking an execution flow using a debugger when the recovery file includes encrypted information; and identifying C&C server information in tracked data or decrypted data.

The analysis of the recovery file may include: identifying whether an execution file that is the recovery file operates when a specific condition is satisfied.

According to the present disclosure, before establishing a VPN session with an external server from a personal computer or terminal of a user, a VPN connection attempt is detected through network traffic analysis, system logs, processes and connected network interfaces, or a combination thereof, and an IP (original IP), such as a VPN client IP and a VPN server IP are obtained from VPN connection attempt signals or messages, when a suspicious activity is detected through analysis of subsequent transmission and reception data, the C&C server is effectively tracked based on the original IP, and the original IP is blocked, thereby preventing data leakage from the host PC.

Furthermore, according to the present disclosure, the deletion of malware on the host PC is monitored, and upon malware deletion, the deleted malware data is recovered and analyzed, thereby resolving the limitation of residual malware threats in the host PC while enabling effective tracking of a C&C server of malware with VPN functionality.

### BRIEF DESCRIPTION OF DRAWINGS

FIG. 1 illustrates a process in which malware infiltrates a user device, ultimately resulting in control being hijacked and data being exfiltrated.
FIG. 2 is a flowchart showing a method of tracking a command and control (C&C) server according to an embodiment of the present disclosure.
FIG. 3 is a flowchart showing a specific procedure that may be employed in the method of tracking a C&C server shown in FIG. 2.
FIG. 4 is an exemplary diagram of a detailed configuration regarding suspicious activities shown in FIG. 3.
FIG. 5 is a flowchart of a method of tracking a C&C server according to another embodiment of the present disclosure.
FIG. 6 is a flowchart of a specific procedure that may be employed in the method of tracking a C&C server shown in FIG. 5.
FIG. 7 is a schematic block diagram of an apparatus for tracking a C&C server according to another embodiment of the present disclosure.
FIG. 8 is a schematic block diagram illustrating a modification of the apparatus for tracking a C&C server shown in FIG. 7.
FIG. 9 is a block diagram illustrating an apparatus for tracking a C&C server according to another embodiment of the present disclosure.

### DETAILED DESCRIPTION OF THE EMBODIMENTS

While the present disclosure is capable of various modifications and alternative forms, specific embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the present disclosure. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

In exemplary embodiments of the present disclosure, "at least one of A and B" may refer to "at least one A or B" or "at least one of one or more combinations of A and B". In addition, "one or more of A and B" may refer to "one or more of A or B" or "one or more of one or more combinations of A and B".

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present disclosure will be described in greater detail with reference to the accompanying drawings. In order to facilitate general understanding in describing the present disclosure, the same components in the drawings are denoted with the same reference signs, and repeated description thereof will be omitted.

FIG. 2 is a flowchart showing a method of tracking a command and control (C&C) server according to an embodiment of the present disclosure.

Referring to FIG. 2, an apparatus for tracking a C&C server that performs a method of tracking a C&C server may be mounted on a host personal computer (PC) 10 or disposed to interwork with the host PC 10. The apparatus for tracking a C&C server may include a C&C server system 30 and may be simply referred to as a "server tracking apparatus." The host PC 10 may be referred to as a user device, user terminal, and the like.

The server tracking apparatus may include a component for tracking a C&C server 50 that performs illegal activities, such as causing the host PC 10 to download malware, communicating with the host PC 10 using the malware, and collecting data from the host PC 10.

First, it may be assumed that malware has been downloaded to the host PC 10 (S20). The server tracking apparatus may monitor process activity logs and registry changes of the host PC 10 (S21).

That is, in operation S21, the server tracking apparatus may be configured to record process activities or monitor registry changes.

Here, recording processor activities may include monitoring process generation and termination, execution file paths, central processing unit (CPU) and memory usage, child processes, network activities, and the like.

More specifically, the monitoring of process generation and termination may include recording when programs or processes are generated and executed and when the programs or processes are terminated. The monitoring of execution file paths may include storing the paths and execution file names of executed processes, such as file writing. The monitoring of CPU and memory usage may include monitoring the usage of system resources used by each process. The monitoring of child processes may include tracking whether a specific process generates other sub-processes. The monitoring of network activities may include identifying whether a process attempts to connect to an external network or transmit data.

Additionally, the monitoring of registry changes may include recording cases in which a registry key is generated, a registry value is modified or changed, or a registry key or value is deleted. Monitoring registry changes may include monitoring critical paths or detecting suspicious activities.

More specifically, the monitoring of critical paths may include monitoring startup program paths, file associations, security settings, and the like. Here, the startup program paths may include a registry storage path in which a program that automatically executes upon system boot of the host PC 10 is registered. Monitoring file associations may include tracking changes to registry that store program information associated with specific file formats, such as execution files (.exe) and Word documents (.docx). Monitoring security settings may include recording whether registry values affecting security settings, such as firewall and user account control (UAC) are changed.

Additionally, the monitoring of suspicious activities may include detecting changes in registry paths used by malware or viruses or detecting abnormal activities that repeatedly attempt to modify the registry.

Next, the host PC 10 may attempt to establish a virtual private network (VPN) connection to the C&C server 50 by malware inside the host PC 10 (S22). In this case, the malware may be malware designed to perform VPN communication.

After the above-described VPN session connection is established, the VPN is referred to as a technology or network that forms a private network over a public network, such as the Internet to securely exchange data on its own. The VPN enhances security and protects privacy by encrypting data and providing anonymity. For example, when transmitting data over the Internet, the VPN generates a secure connection referred to as a tunnel to transmit data.

For example, when malware executes VPN software of the host PC 10, the VPN software may encrypt data and transmit the encrypted data to a VPN server located inside the host PC 10 or to which the host PC 10 is connected. The VPN server may decrypt the encrypted data and then transmit the data to a desired destination, which is the C&C server 50.

Meanwhile, since the VPN session connection has not yet been established at the time of the above described VPN connection attempt, a message attempting a VPN connection transmitted from the host PC 10 to the C&C server 50 may include the original IP of the C&C server 50. The original IP may be referred to as the original IP, source IP, and the like.

Therefore, the server tracking apparatus may extract the original IP for VPN communication from information in the message attempting a VPN connection when the VPN connection is attempted in operation S22 (S23).

After the VPN connection is established, the host PC 10 may transmit data to the C&C server 50 (S24). Additionally, the host PC 10 may receive data from the C&C server 50 (S25). In this case, the server tracking apparatus may monitor all data transmitted from the host PC 10 and data transmitted to the host PC 10, that is, all transmitted and received data (S26).

For example, the server tracking apparatus may identify whether an abnormal port is used, identify whether malware requests a domain of the C&C server 50, or identify whether a request header includes a specific string. The specific string may include a user-agent, a host, and the like.

Then, the server tracking apparatus may be configured to, when a suspicious activity is found in operations S21 to S26, register the corresponding IP address on a blacklist based on the previously stored original IP information and output a user confirmation request alarm to the host PC 10.

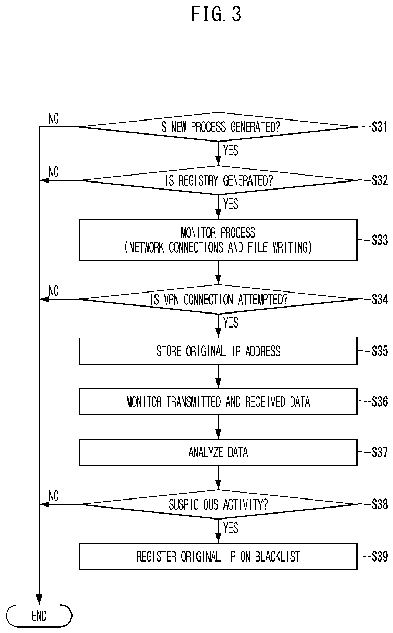

FIG. 3 is a flowchart showing a specific procedure that may be employed in the method of tracking a C&C server shown in FIG. 2.

Referring to FIG. 3, a server tracking apparatus that monitors process activity records and registry changes of a host PC may determine whether a new process has been generated in the host PC (S31).

When it is determined in operation S31 that a new process has been generated, the server tracking apparatus may determine whether a registry has been generated (S32). In addition, the server tracking apparatus may monitor process activities, such as network connections and file writing (S33).

Next, the server tracking apparatus may be configured to, when the host PC attempts a VPN connection with an external server, detect or determine the corresponding VPN connection attempt (S34). In response to the VPN connection attempt being detected or determined, the server tracking apparatus may store the original IP address presumed to be the original IP address of the C&C server based on information in a signal or message attempting the VPN connection (S35).

Then, the server tracking apparatus may monitor data transmitted and received between the host PC and the external server (S36). In addition, the server tracking apparatus may analyze the monitored data (S37).

In operation S36, the monitoring of transmitted and received data between the host PC and the external server may include monitoring when the server tracking apparatus is mounted on or connected to the host PC, that is, monitoring from inside the VPN session, and monitoring from outside the host PC, i.e., from outside the VPN session.

The monitoring of transmitted and received data from outside the VPN session may include analyzing meta-information of data flows without directly analyzing encrypted data flows of the VPN. For example, it may include capturing network traffic or analyzing bandwidth and patterns. More specifically, network traffic capturing may refer to collecting data transmitted and received at a network interface using packet capture tools, such as Wireshark and tcpdump. Although the captured data is encrypted, and content of the captured data is generally unreadable by a monitoring device or analysis device, but information, such as a data packet size, an unencrypted IP address, an IP of a connected VPN server, a protocol, time, and bandwidth usage may be identified. Additionally, analyzing bandwidth and patterns may include analyzing bandwidth consumption and traffic patterns of VPN traffic using network monitoring tools, such as NetFlow and Wireshark.

In addition, the monitoring of transmitted and received data from inside the VPN session may include, by the server tracking apparatus or a monitoring device or analysis devices included in the server tracking apparatus on the host PC side, decrypting VPN traffic and processing data. For example, the server tracking apparatus may enable debugging or detailed logs in VPN software of a client or server to record corresponding data. The detailed logs may include traffic logs, metadata logs, and the like. Additionally, the server tracking apparatus may when knowing a VPN session key or encryption key as a man-in-the-middle, capture and decrypt corresponding data packets. In addition, the server tracking apparatus may be configured to analyze traffic at an application layer.

Next, the server tracking apparatus may be configured to determine whether a suspicious activity is detected in operations S31 to S37 or whether a suspicious activity is present in a result of analyzing the monitored data (S38). Suspicious activities may be the use of an abnormal port, requesting a domain of a C&C server, inclusion of a strange string in a request headers, and the like. Additionally, the server tracking apparatus may be configured to process suspicious activities or monitoring results recorded or stored in operations S31 to S37 as unit groups.

When a suspicious activity is detected, the server tracking apparatus may register the original IP stored in a unit group to which the corresponding suspicious activity belongs as a corresponding IP associated with the suspicious activity on a blacklist (S39).

Meanwhile, in some of the operations S31 to S37 (refer to FIG. 3), specifically in operations S31, S32, S34, and S38, when a new process is not generated, when a registry is not generated, when a VPN connection attempt is not present, or when a suspicious activity is not present, the server tracking apparatus may terminate the current server tracking process. Additionally, the server tracking apparatus may restart or repeatedly perform the server tracking process that records process activities of the host PC or monitors registry changes according to a preset time, period, and the like.

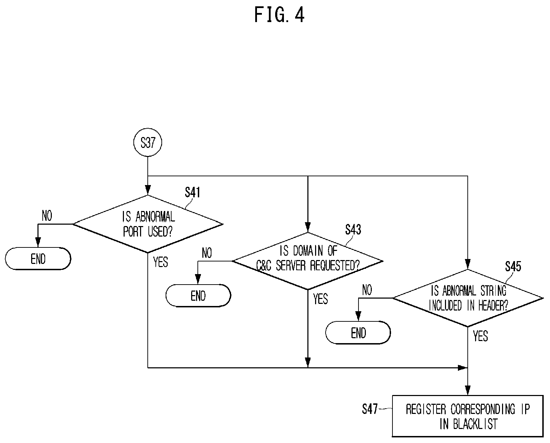

FIG. 4 is an exemplary diagram of a detailed configuration regarding suspicious activities shown in FIG. 3.

Referring to FIG. 4, in determining suspicious activities based on results, such as results of recording process activities of the host PC, monitoring registry changes, or analyzing recorded or monitored data (S37), the server tracking apparatus may first determine whether there is an abnormal port usage (S41), determine whether there is a request for a domain of a C&C server(S43), or determine whether there is an inclusion of an abnormal strings in a request header (S45).

When it is determined in operations S41, S43, and S45 that an abnormal port is used, a request is for a domain of a C&C server, or an abnormal string is included in a header, the server tracking apparatus may register the original IP collected in the process leading to the above-described operations on a blacklist (S47).

Meanwhile, in the present embodiment, the determination of whether there is an abnormal port usage in operation S41, the determination of whether there is a request for a domain of a C&C server in operation S43, or the determination of whether there is an inclusion of an abnormal strings in a request header in operation S45 are illustrated as being performed in parallel. However, the present disclosure is not limited to the configuration and may include a configuration in which the determinations of a suspicious activity are sequentially performed in any order, or a configuration in which the determination processes for a suspicious activity are performed in a form combining parallel processing and serial processing.

Meanwhile, the method of tracking a C&C server according to the present disclosure may be configured to track a C&C server after malware recovery.

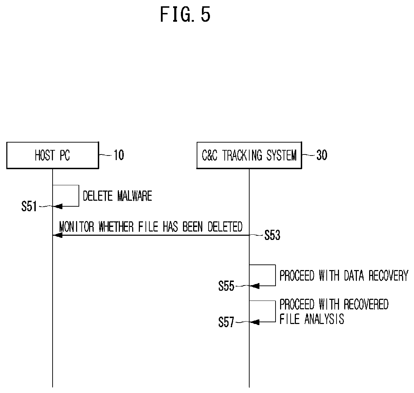

FIG. 5 is a flowchart of a method of tracking a C&C server according to another embodiment of the present disclosure.

Referring to FIG. 5, a server tracking apparatus including a C&C tracking system 30 may be configured to operate to search for malware in a host PC 10 and delete the malware from the host PC 10, or to support operations of the host PC 10 (S51).

The server tracking apparatus may be configured to, when malware is deleted from the host PC 10, monitor whether a malware file has been deleted from the host PC 10 (S53).

Upon confirming the deletion of malware files from the host PC 10, the server tracking apparatus may proceed with data recovery (S55). Data recovery may include recovering deleted original data using an open data recovery program, such as TestDisk. The recovered malware may be stored in a specific storage space of the host PC 10, such as a secure folder, or in a specific storage space of the server tracking apparatus.

Then, the server tracking apparatus may analyze the recovered data files (S57). The analysis of the recovered files may be formed to further include preprocessing processes, such as identifying the type of recovered files and identifying whether files are damaged.

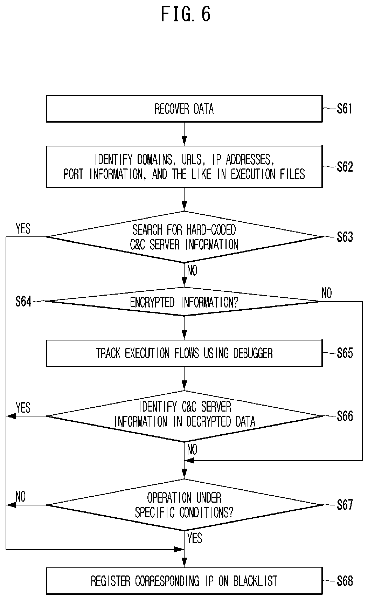

FIG. 6 is a flowchart of a specific procedure that may be employed in the method of tracking a C&C server shown in FIG. 5.

Referring to FIG. 6, first, the server tracking apparatus monitoring the deletion of malware from the host PC may recover malware data (S61).

Once the malware data is recovered, the server tracking apparatus may identify domains, web addresses, URLs, IP addresses, port information, and the like within execution files of the recovered data using a disassembler, such as Interactive Disassembler Professional (IDA Pro) and the like (S62).

Next, the server tracking apparatus may search for or identify C&C server information hard-coded in the execution files (S63). When the C&C server information is found in operation S63, the server tracking apparatus may register a corresponding IP in the found C&C server information on a blacklist (S68).

Meanwhile, when the C&C server information is not found in operation S63, the server tracking apparatus may determine whether the execution files are encrypted (S64). When it is determined in operation S64 that the execution files are encrypted, the server tracking apparatus may track execution flows using a debugger to identify decrypted data (S65).

Then, the server tracking apparatus may identify whether C&C server information is present in the decrypted data (S66). When it is determined in operation S66 that the C&C server information is present in the decrypted data, the server tracking apparatus may register the corresponding IP in a blocklist (S68).

On the other hand, when it is determined in operation S64 that the execution files are not encrypted or when it is determined in operation S66 that the C&C server information is not present in the decrypted data, the server tracking apparatus may identify whether the execution files operate when specific conditions are satisfied (S67).

When it is determined in operation S67 that the execution files operate when the specific conditions are satisfied, the server tracking apparatus may register domains, URLs, or IP addresses identified in the recovered data on a blacklist (S68).

When it is determined in operation S67 that the execution files do not operate when the specific conditions are satisfied, the server tracking apparatus may terminate the current C&C server tracking process.

Additionally, when any suspicious activity is found in any one of the operations S63, S66, and S67, the server tracking apparatus may be configured to register the corresponding IP on a blacklist and then output a user confirmation request alarm to the host PC.

Meanwhile, in the present embodiment, the process is configured to search for hard-coded C&C server information, determine whether recovered data is encrypted information, and then determine whether execution files in the recovered data operate when specific conditions are satisfied. However, the present disclosure is not limited to such configuration. For example, the process may be configured to first determine whether recovered data is encrypted information, then determine whether execution files in the recovered data operate when specific conditions are satisfied, and then identify domains, URLs, IP addresses, port information, and the like within the execution files and search for hard-coded C&C server information.

As such, operations S62 to S67 of the method of tracking a C&C server according to the present disclosure may be modified into a parallel configuration or serial-parallel configuration having any order.

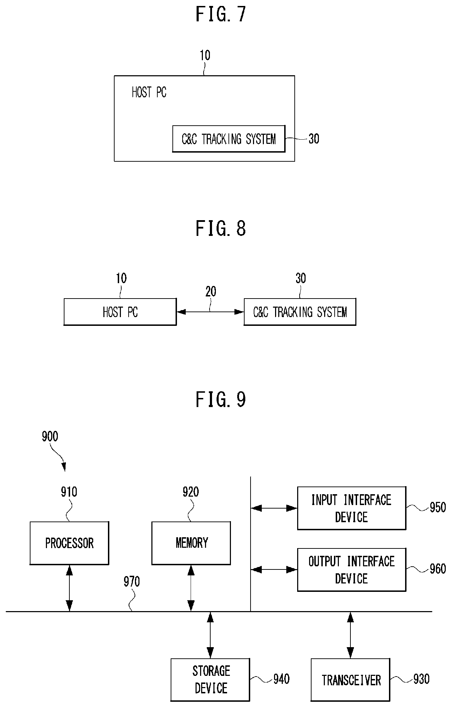

FIG. 7 is a schematic block diagram of an apparatus for tracking a C&C server according to another embodiment of the present disclosure.

Referring to FIG. 7, the apparatus for tracking a C&C server may include a C&C tracking system 30 installed in a host PC (a host personal computer) 10 in the form of software, hardware, or a combination of software and hardware. In a broad sense, the host PC including the C&C tracking system 30 may be a server tracking apparatus that also serves as a user terminal.

The host PC 10 may be referred to as at least one of a user device, a user equipment (UE), a terminal, an access terminal, a mobile terminal, a station, a subscriber station, a mobile station, a portable subscriber station, an Internet of Things (IoT) device, a mounted module/device/terminal or on-board device/terminal, and an embedded device.

Additionally, the above-described terms, such as device, terminal, user equipment may broadly encompass mobile terminals, such as mobile phones and smartphones, tablets, such as electronic pads, notebooks, laptops, wearable devices, e-book readers, portable game consoles, sound devices, desktop computers, and the like.

The C&C tracking system 30 may include a process activity recording module, a registry change monitoring module, an IP storage module, a transmitted/received data storage module, an analysis module, a suspicious activity determination module, a blacklist registration module, a data recovery module, an information verification module, a server information search module, an encrypted information determination module, a debugger module, a condition satisfaction verification module, and the like. When the C&C tracking system 30 has a software form, the C&C tracking system 30 may include at least one instruction or program instruction for operating the above described modules.

FIG. 8 is a schematic block diagram illustrating a modification of the apparatus for tracking a C&C server shown in FIG. 7.

Referring to FIG. 8, the C&C tracking system 30 may be formed to be connected to the host PC 10 through an interface 20 and operate in at least partial coordination with functions or operations of the host PC 10. The interface 20 may include wired interfaces, such as a Universal Serial Bus (USB) and a serial port, and wireless interfaces, such as wireless fidelity (Wi-Fi) and Bluetooth.

According to the above described configuration, the C&C tracking system 30 may monitor resources of the host PC 10, detect operational events, or perform bidirectional control with the host PC 10.

FIG. 9 is a block diagram illustrating an apparatus for tracking a C&C server according to another embodiment of the present disclosure.

Referring to FIG. 9, the apparatus 900 for tracking a C&C server may include at least one processor 910 on which software for tracking C&C servers is loaded or at least some hardware is deployed. The at least one processor 910 may be installed in the host PC described above with reference to FIG. 7. That is, the apparatus 900 for tracking a C&C server according to the embodiment may be a host PC, include a host PC, or be included in a host PC.

Additionally, the apparatus 900 for tracking a C&C server may further include a memory 920 or may further include a transceiver 930 that connects to a network to perform communication. The at least one processor 910 and the memory 920 may constitute at least one controller. The transceiver 930 may include at least one sub-communication system or wireless communication module (WCM) that supports wired networks or wireless networks. Additionally, the apparatus 900 for tracking a C&C server may further include a storage device 940, an input interface device 950, an output interface device 960, and the like.

The respective components included in the apparatus 900 for tracking a C&C server may be connected via a bus 970 to communicate with each other. Each component included in the apparatus 900 for tracking a C&C server may be connected via individual interfaces or individual buses centered on the processor 910, rather than a common bus. For example, the processor 910 may be connected to at least one of the memory 920, the transceiver 930, the storage device 940, the input interface device 950, and the output interface device 960 via a dedicated interface.

The processor 910 may execute program commands stored in at least one of the memory 920 and the storage device 940. The processor 910 may be a central processing unit (CPU), a graphics processing unit (GPU), or a dedicated processor on which the method according to embodiments of the present disclosure are performed.

Each of the memory 920 and the storage device 940 may include at least one of a volatile storage media and a non-volatile storage media. For example, the memory 920 may include at least one of a read Only Memory (ROM) and a random access memory (RAM).

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of tracking a command and control (C&C) server, which is performed by an apparatus for monitoring a process activity and a registry change of a host personal computer (PC), the method comprising:
storing a virtual private network (VPN) communication internet protocol (IP) when malware within the host PC attempts a VPN connection to an external server;
monitoring or storing transmitted and received data between the host PC and the external server;
analyzing the transmitted and received data; and
registering the VPN communication IP on a blacklist when a suspicious activity is present in a result of the analysis of the transmitted and received data.

2. The method of claim 1, further comprising identifying whether a new process is generated in the host PC.

3. The method of claim 1, further comprising monitoring a network connection and file writing used by a process generated in the host PC.

4. The method of claim 1, further comprising identifying whether a registry is generated in the host PC.

5. The method of claim 1, wherein the suspicious activity includes use of an abnormal port, requesting a domain of an external server, and inclusion of a strange string in a request header.

6. The method of claim 1, further comprising:
monitoring whether a file of malware in the host PC is deleted;
recovering data of the malware when the file of the malware is deleted;
analyzing a recovery file of the malware; and
registering an IP address identified in the recovery file on the blacklist when suspicious information is present in a result of analyzing the recovery file.

7. A method of tracking a command and control (C&C) server, which is performed by an apparatus for monitoring a process activity and a registry change of a host personal computer (PC), the method comprising:
monitoring whether a file of malware in the host PC is deleted;
recovering data of the malware;
analyzing a recovery file of the malware; and
registering an IP address identified in the recovery file on a blacklist when suspicious information is present in a result of analyzing the recovery file.

8. The method of claim 7, wherein the analyzing of the recovery file includes identifying at least one of a domain, a uniform resource locator (URL), an internet protocol (IP) address, and port information in the recovery file.

9. The method of claim 7, wherein the analyzing of the recovery file includes identifying C&C server information hard-coded in the recovery file.

10. The method of claim 7, wherein the analyzing of the recovery file includes:
tracking an execution flow using a debugger when the recovery file includes encrypted information; and
identifying C&C server information in tracked data or decrypted data.

11. The method of claim 7, wherein the analyzing of the recovery file includes identifying whether an execution file that is the recovery file operates when a specific condition is satisfied.

12. An apparatus for tracking a command and control (C&C) server, which monitors a process activity and a registry change of a host personal computer (PC), the apparatus comprising:
a processor; and
a memory connected to the processor and storing at least one instruction,
wherein the at least one instruction causes the processor to:
store a virtual private network (VPN) communication internet protocol (IP) when malware within the host PC attempts a VPN connection to an external server;
monitor or store transmitted and received data between the host PC and the external server;
analyze the transmitted and received data; and
register the VPN communication IP on a blacklist when a suspicious activity is present in a result of the analysis of the transmitted and received data.

13. The apparatus of claim 12, wherein the processor identifies whether a new process is generated in the host PC and monitors a network connection and file writing used by a process generated in the host PC.

14. The apparatus of claim 12, wherein the processor identifies whether a registry is generated in the host PC.

15. The apparatus of claim 12, wherein the suspicious activity includes use of an abnormal port, requesting a domain of an external server, and inclusion of a strange string in a request header.
